# EUROPÄISCHE PATENTANMELDUNG

(11) **EP 3 081 332 A2**
(43) Veröffentlichungstag der Anmeldung: **19.10.2016**
(21) Anmeldenummer: 16158416.4
(22) Anmeldetag: 03.03.2016
(51) Int. Cl.: B23Q 11/10

(54) **WERKZEUGHALTER**

(30) Priorität: 14.04.2015 DE 202015101834 U
(71) Anmelder: Simtek AG, 72116 Mössingen (DE)
(72) Erfinder: Seifermann, Norbert, 72411 Bodelshausen (DE)
(74) Vertreter: Jakelski, Joachim

(57) **Zusammenfassung**

Ein Werkzeughalter umfassend ein einspannbares Gehäuse und wenigstens einen in dem Gehäuse (100) angeordneten Kühlkanal (140) ist dadurch gekennzeichnet, dass in dem Gehäuse (100) zwei Kühlkanäle (140) angeordnet sind, die bedarfsweise verschließbar sind.

## Beschreibung

Die Erfindung betrifft einen Werkzeughalter nach der Gattung des Anspruchs 1.

Um ein Werkzeug an einer Werkzeugmaschine zu befestigen, werden Werkzeughalter, auch als Futter bezeichnet, eingesetzt. Ein solches Futter geht beispielsweise aus der DE 199 35 960 A1 hervor. Um während des Bearbeitungsprozesses eine Kühlung des Werkzeugs zu ermöglichen, sind in dem Werkzeughalter Kühlkanäle vorgesehen, welche die Zufuhr eines Kühlmittels ermöglichen.

Aus der DE 11 2013 000 814 T5 geht beispielsweise ein Werkzeughalter hervor, dessen Auslass benachbart zu einer Schneide des Werkzeugs mündet.

Der Werkzeughalter und das Werkzeug sind dabei aufeinander abgestimmt und der Werkzeughalter ist seinerseits auf eine Werkzeugmaschine, an welcher er montiert wird, angepasst.

### Offenbarung der Erfindung

### Vorteile der Erfindung

Ein Werkzeughalter mit den Merkmalen des Anspruchs 1 weist demgegenüber den Vorteil auf, dass er universell bei unterschiedlichen Werkzeugmaschinen einsetzbar ist. Hierzu sind in einem Gehäuse des Werkzeughalters zwei Kühlkanäle angeordnet, die bedarfsweise verschließbar sind. Jeder der Kühlkanäle weist die volle Funktionalität als Kühlkanal auf, sodass die Kühlkanäle gewissermaßen redundant sind. Je nach Position des Kühlmittelauslasses in der Werkzeugmaschine kommt entweder der eine oder der andere Kühlkanal oder es kommen beide Kühlkanäle zum Einsatz. Wenn nur ein Kühlkanal zum Einsatz kommt, wird der andere Kühlkanal verschlossen. Möglich ist es auch, dass beide Kühlkanäle verschlossen werden, wenn im Werkzeug selbst ein Kühlkanal vorgesehen ist, wie nachfolgend noch näher erläutert wird. Aus diesem Grund sind beide Kühlkanäle bedarfsweise verschließbar.

Vorteilhafte Ausgestaltungen der Erfindung sind Gegenstand der auf Anspruch 1 rückbezogenen Unteransprüche. So können die Kühlkanäle rein prinzipiell auf unterschiedlichste Weise in dem Gehäuse des Werkzeughalters angeordnet sein. Eine vorteilhafte Ausgestaltung sieht vor, dass die Kühlkanäle derart neben einer Einspannöffnung für ein Werkzeug verlaufen, dass sie zu einer durch eine Symmetrieachse der Werkzeugaufnahme verlaufenden Spiegelebene spiegelsymmetrisch sind. Diese symmetrische Anordnung der Kühlkanäle ermöglicht eine sehr weitgehende Einsatzmöglichkeit des Werkzeughalters an unterschiedlichen Werkzeugmaschinen.

Besonders vorteilhaft ist vorgesehen, dass die Kühlkanäle in einem Winkel zur Symmetrieachse der Einspannöffnung oder Werkzeugaufnahme V-förmig zur Symmetrieachse verlaufend angeordnet sind. Hierdurch ist es möglich, das Kühlmittel besonders effektiv auf das Werkzeug zu richten.

Die Kühlkanäle weisen in dem Gehäuse des Werkzeughalters vorteilhafterweise jeweils eine nach außerhalb des Gehäuses offene Bohrung auf, die durch jeweils einen Gewindestift verschließbar ist.

Auf diese Weise kann abhängig vom Einsatz des Werkzeughalters vor Ort die passende Kühlkanalöffnung festgelegt werden.

Die Einspannöffnung weist im Prinzip eine beliebige Gestalt auf. Sie ist an das einzuspannende Werkzeug angepasst. Gemäß einer vorteilhaften Ausführungsform ist die Einspannöffnung zylinderförmig ausgebildet. So können eine große Zahl von Werkzeugen eingespannt werden, die meistens zylindrisch sind.

Auch das Gehäuse des Werkzeughalters kann rein prinzipiell unterschiedlich ausgebildet sein und ist im Prinzip an die Werkzeugmaschine, in der es zum Einsatz kommt, angepasst. Eine vorteilhafte Ausgestaltung sieht eine zylinderförmige Gestalt des Werkzeughalters vor. Hierdurch ist er bei einer großen Zahl von Werkzeugmaschinen einsetzbar.

### Kurze Beschreibung der Zeichnung

Ausführungsbeispiele der Erfindung sind in den Zeichnungen dargestellt und werden in der nachfolgenden Beschreibung näher erläutert.

Es zeigen:
Fig. 1 eine erste Ausführungsform eines aus dem Stand der Technik bekannten Werkzeughalters;
Fig. 2 eine weitere Ausführungsform eines aus dem Stand der Technik bekannten Werkzeughalters;
Fig. 3 eine weitere Ausführungsform eines aus dem Stand der Technik bekannten Werkzeughalters
Fig. 4 eine Seitenansicht sowie eine Schnittansicht entlang der Linie A-A eines erfindungsgemäßen Werkzeughalters;
Fig. 5 eine Schnittansicht des in Fig. 4 dargestellten Werkzeughalters und
Fig. 6a bis d den erfindungsgemäßen Werkzeughalter und verschiedene in ihm befestigte Werkzeuge.

### Beschreibung von Ausführungsbeispielen

In der nachfolgenden Beschreibung werden für gleiche in den Figuren dargestellte Merkmale gleiche Kennzeichen verwendet.

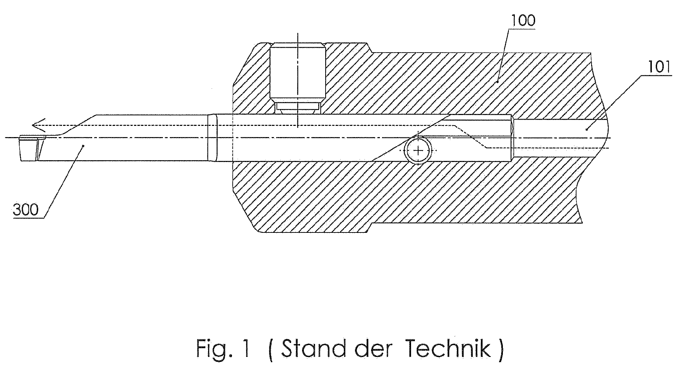

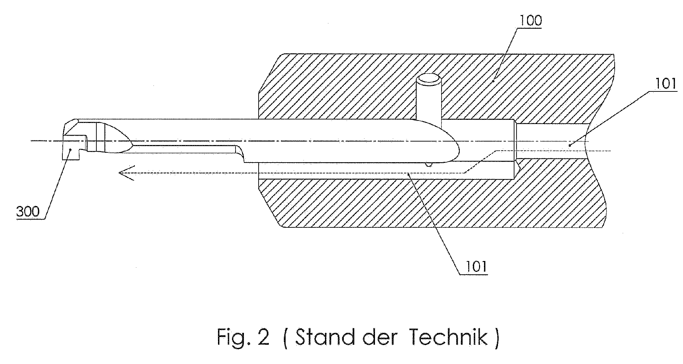

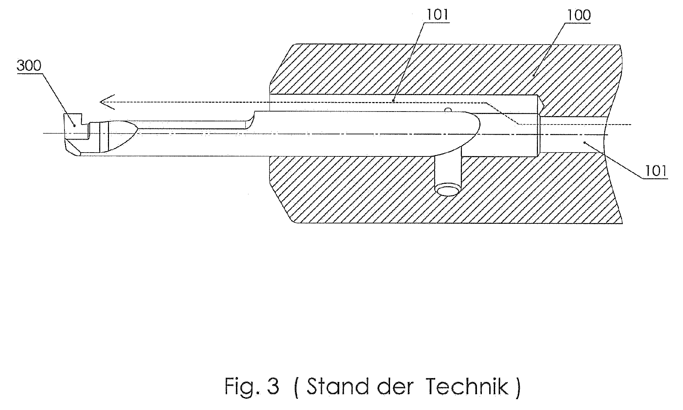

Fig. 1, Fig.2, Fig. 3 zeigen jeweils aus dem Stand der Technik bekannte Werkzeughalter. Diese weisen ein Gehäuse 100 auf, in dem ein Werkzeug 300 befestigbar ist. In dem Gehäuse ist jeweils ein Kühlkanal 101 angeordnet, der unterschiedlich ausgebildet sein kann. Bei dem in Fig. 1 dargestellten Werkzeughalter mündet der Kühlkanal 101 in einen in dem Werkzeug 300 angeordneten Kühlkanal. Bei den in Fig. 2 und Fig. 3 dargestellten Werkzeughaltern verläuft jeweils der Kühlkanal 101 zu beiden Seiten des Werkzeugs 300. Abhängig von der Anordnung des Kühlkanals 101 im Gehäuse 100 des Werkzeughalters und der Anordnung des Werkzeughalters in einer (nicht dargestellten) Werkzeugmaschine sowie der Anordnung des Werkzeugs 300 in dem Werkzeughalter existiert jeweils eine Position, in der der Werkzeughalter zusammen mit dem darin befestigten Werkzeug 300 in einer (nicht dargestellten) Werkzeugmaschine angeordnet werden kann, um eine Kühlung zu ermöglichen.

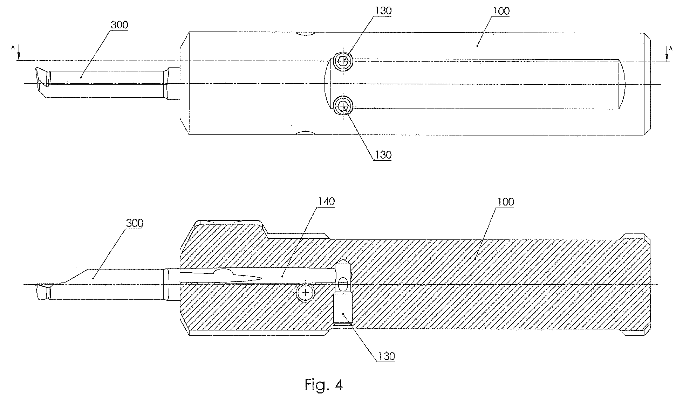

In Fig. 4 ist ein erfindungsgemäßer Werkzeughalter dargestellt, der ein zylindrisches Gehäuse 100 aufweist. In dem Werkzeughalter ist ein ebenfalls im Wesentlichen zylindrisch ausgebildetes Werkzeug 300 angeordnet. Im Gegensatz zu den aus dem Stand der Technik bekannten Werkzeughaltern weist der erfindungsgemäße Werkzeughalter zwei Kühlkanäle 140 auf, die neben einer Einspannöffnung 110, die auch als Werkzeugaufnahme bezeichnet wird, verlaufen und jeweils durch zwei Bohrungen 130 nach außerhalb des Gehäuses 100 offen sind. In diese Bohrungen 130, die mit Gewinden versehen sind, sind Gewindestifte eindrehbar, die ein dichtes Verschließen der Kühlkanäle 140 ermöglichen.

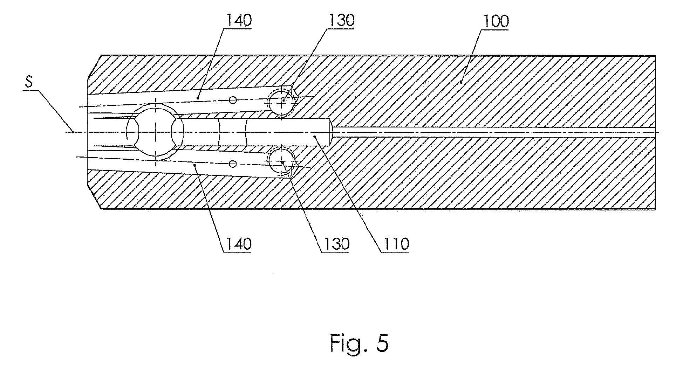

In Fig. 4 ist in der unten gezeigten Schnittdarstellung die Bohrung 130 dargestellt. In der oberen Seitenansicht des Werkzeughalters sind jeweils die beiden Bohrungen 130 ersichtlich, die durch Gewindestifte verschließbar sind. Die beiden Kühlkanäle 140 verlaufen - wie in der Schnittansicht Fig. 5 dargestellt - schräg zur Symmetrieachse S des Werkzeughalters und auch des Werkzeugs 300. Dabei schließen sie mit der Symmetrieachse S einen Winkel ein, sodass sie im Wesentlichen V-förmig auf das einzuspannende Werkzeug 300 gerichtet sind. Diese V-förmige Anordnung ermöglicht eine besonders effektive Kühlung des Werkzeugs 300 während des Schneidvorgangs.

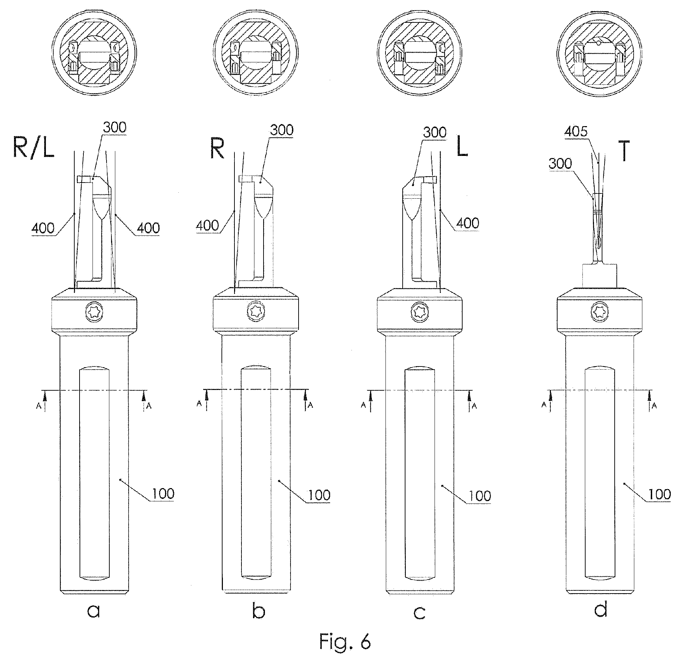

In Fig. 6a bis d ist schematisch dargestellt, wie unterschiedliche Werkzeuge in unterschiedlichen Positionen in dem Werkzeughalter angeordnet sind. Dabei sind die Kühlkanäle 140 offen bzw. teilweise oder ganz verschlossen. Bei dem in Fig. 6a dargestellten Beispiel sind beide Kühlkanäle 140 offen, sodass die Kühlmittelströme, die schematisch durch Linien 400 dargestellt sind, auf das Werkzeug 300 gerichtet sind, in Fig. 6 mit "R/L" bezeichnet. In den jeweils oben dargestellten Schnittdarstellungen entlang den Linien A-A in Fig. 6a bis d ist jeweils die Öffnung der beiden Kühlkanäle 140 dargestellt. In Fig. 6a sind beide Kühlkanäle 140 offen. In Fig. 6b ist dagegen nur der eine Kühlkanal 140 offen. In diesem Falle ist der Kühlkanal auf der einen Seite, in Fig. 6 mit "R" bezeichnet, offen und entsprechend der Kühlmittelstrom 400 auf das Werkzeug 300 gerichtet. Bei dem in Fig. 6c dargestellten Beispiel ist der andere Kühlkanal, in Fig. 6c als "L" bezeichnet, offen und der entsprechende, aus ihm entstehende Kühlmittelstrom auf das Werkzeug 300 gerichtet. Fig. 6d zeigt eine Ausführungsform des Werkzeugs 300, mit einem internen Kühlkanal. Auch ein solches Werkzeug 300 ist rein prinzipiell einsetzbar. In diesem Fall werden beiden Kühlkanäle 140 verschlossen, sodass der Kühlmittelstrom 405 durch das Werkzeug 300 selbst geleitet wird, in Fig. 6d mit "T" bezeichnet.

Der große Vorteil des erfindungsgemäßen Werkzeughalters ist seine universelle Einsetzbarkeit in unterschiedlichen Positionen, links, rechts. Dabei können die Kühlkanäle 140 unterschiedliche geöffnet und geschlossen sein.

## Patentansprüche

1. Werkzeughalter umfassend ein einspannbares Gehäuse und wenigstens einen in dem Gehäuse (100) angeordneten Kühlkanal (140), **dadurch gekennzeichnet, dass** in dem Gehäuse (100) zwei Kühlkanäle (140) angeordnet sind, die bedarfsweise verschließbar sind.

2. Werkzeughalter nach Anspruch 1, **dadurch gekennzeichnet, dass** die Kühlkanäle (140) neben einer Einspannöffnung (110) für ein Werkzeug (300) derart verlaufen, dass sie zu einer durch eine Symmetrieachse (S) der Einspannöffnung (110) verlaufenden Spiegelebene spiegelsymmetrisch sind.

3. Werkzeughalter nach Anspruch 2, **dadurch gekennzeichnet, dass** die Kühlkanäle (140) in einem Winkel zur Symmetrieachse (S) der Einspannöffnung (110) V-förmig zur Symmetrieachse (S) verlaufend angeordnet sind.

4. Werkzeughalter nach Anspruch 1, **dadurch gekennzeichnet, dass** die Kühlkanäle (140) jeweils eine nach außerhalb des Gehäuses (100) verlaufende Bohrung (130) aufweisen, die durch jeweils einen Gewindestift verschließbar ist.

5. Werkzeughalter nach einem der Ansprüche 2 bis 4, **dadurch gekennzeichnet, dass** die Einspannöffnung (110) zylinderförmig ausgebildet ist.

6. Werkzeughalter nach einem der vorstehenden Ansprüche, **dadurch gekennzeichnet, dass** das Gehäuse (100) eine zylinderförmige Gestalt aufweist.
